# EUROPEAN PATENT APPLICATION

(11) **EP 4 414 062 A1**
(43) Date of publication of application: **14.08.2024**
(21) Application number: 23807921.4
(22) Date of filing: 18.05.2023
(51) Int. Cl.: B01J 19/24, B01J 19/26, B01J 19/00, C09C 1/48

(54) **CARBON BLACK REACTOR WITH COOLING FUNCTION**

(30) Priority: 19.05.2022 KR 20220061414
(71) Applicant: ORION Korea Co., Ltd., Yeosu-si, Jeollanam-do 59614 (KR)
(72) Inventor: PARK, Byoung Wan, Yeosu-si Jeollanam-do 59614 (KR); KIM, Hyung Ju, Yeosu-si Jeollanam-do 59614 (KR)
(74) Representative: f & e patent
(86) International application number: PCT/KR2023/006753
(87) International publication number: WO 2023/224402

(57) **Abstract**

The present invention relates to a carbon black reactor with a cooling function, wherein a combustion hole of the reactor, which induces a chemical reaction at high temperature to produce carbon black, is continuously cooled, and thus, no deformation occurs in the diameter of the combustion hole. The carbon black reactor comprises: a body made of metal, having a pair of flanges arranged to be spaced apart and a central portion which connects the spaced-apart flanges and through which a combustion hole penetrates to allow a combustion gas and raw material oil to react with each other; a plurality of injection nozzles which spray the raw oil into the combustion hole; a pair of cooling rooms which are respectively provided on the facing inner plate surfaces of the flanges and exchange heat with the flanges while diffusing cooling water to the front surfaces of the flanges; a cooling distribution pipe which surrounds the outer circumferential surface of the combustion hole with a gap therebetween to form a flow path, and is divided into a first supply flow path and a second supply flow path through a partition panel so that the supplied cooling water is directed to each cooling room while exchanging heat throughout the combustion hole; a pair of cooling water supply pipes which are respectively installed on the first and second supply flow paths and supply cooling water; and cooling water drain pipes which are respectively installed in the pair of cooling rooms and drain the heat-exchanged cooling water.

## Description

### Technical Field

The present invention relates to a carbon black reactor, and more specifically relates to a carbon black reactor with a cooling function, wherein the reactor, which induces a chemical reaction at high temperature to produce carbon black, is continuously cooled, and thus, no deformation occurs in the diameter of a combustion hole arranged inside the reactor.

### Background Art

Generally, carbon black is widely used in various fields such as inks, paints, reinforcing fillers, conductive materials, positive electrode materials for secondary batteries, electromagnetic shielding materials, and heating members. Carbon black has excellent physicochemical and thermal properties including conductivity, chemical resistance, weatherproofness, and heat resistance, and thus is manufactured in forms such as pellets or powder together with various ceramic materials to be utilized as various types of product additive.

Accordingly, the manufacture of a product with uniformly distributed carbon black is an important factor in casting processes such as slip-casting, tape-casting, injection molding or extrusion.

Carbon black is manufactured via, for example, a furnace method, a channel method, a thermal method, or an acetylene method, and among those, the furnace method which can manufacture the carbon black more efficiently is typically most often adopted.

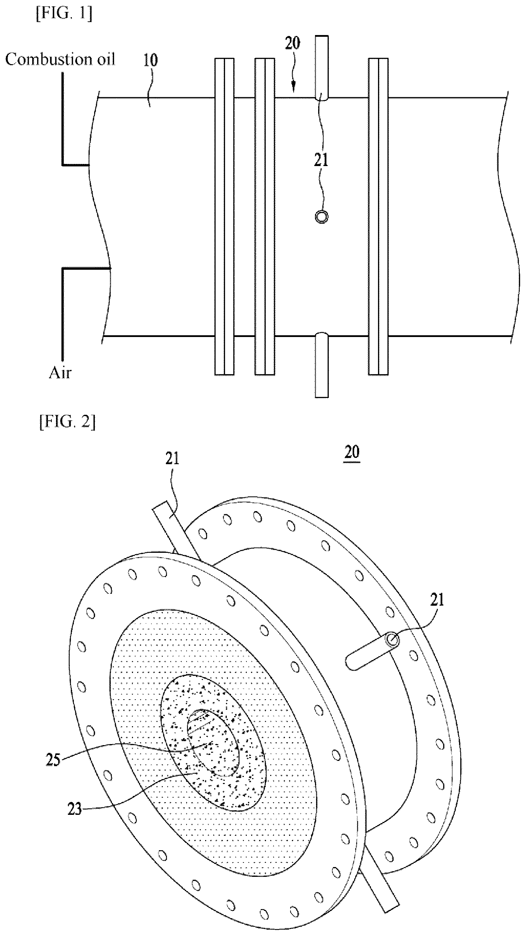

In the furnace method as shown in Figure 1, a liquid or gas combustion oil is supplied together with air via a nozzle into a heating furnace (10), the inside of which is heated to high temperature, and reacted with an oxidizing agent, thereby producing a high-temperature combustion gas, then the produced combustion gas passes through a reactor (20) into which a raw oil material (Bunker C oil and the like) is sprayed via an injection nozzle (21) and chemically reacts with the raw oil material at a high temperature (1500 degrees or more) to induce an incomplete combustion, a pyrolysis or a dehydrogenation reaction and produce a mixed gas including carbon black, and the produced mixed gas is manufactured into certain forms such as pellets or beads through typical post-processing collection processes and molding processes to give a product.

In such a case, the reactor (20) creates a high-temperature environment by means of combusting the combustion gas and the raw oil material, and the inside has to use refractories (23) having high heat resistance since the movement speed increases.

Such refractories (23) are arranged inside the reactor while maintaining a certain thickness and a circular combustion hole (25) where the supplied raw oil material and combustion gas are combusted is formed in the central portion, as shown in Figure 2.

However, the periodic replacement of the reactor (20) has to be carried out due to the changes in the shape of the inner diameter as, despite the refractories (23) having high heat resistance, the inner diameter of the combustion hole (25) made of the refractories (23) gradually melts away during typical use over 3-4 months since the combustion hole (25) is continuously maintained as a high-temperature environment.

Should continuous operation be carried out when the inner diameter of the combustion hole (25) has been altered, there is the critical problem of the quality of the carbon black decreasing and a change occurring in the production amount in accordance with the set data values of the combustion hole.

In addition, there is an environmental problem, even in terms of disposal, as the material of the refractories is made from a group 1 carcinogen.

### [Prior Art Documents]

### [Patent Documents]

(Patent Document 1) Korean Laid-Open Patent KR 10-2019-0078848 A
(Patent Document 2) Korean Registered Patent KR 10-0602542 B1

### Detailed Description of the Invention

### Technical Problem

The present invention has been devised to resolve the technical prejudice and problems described above, and the object of the present invention is to provide a carbon black reactor with a cooling function, wherein the combustion hole of the reactor is made from a metal material, and cooling water is continuously circulated around the combustion hole that has been heated to a high temperature, and thus deformation in the diameter of the combustion hole is prevented by means of cooling the whole combustion hole.

### Means of Solving the Problem

A carbon black reactor with a cooling function of the present invention for achieving the objects above comprises: a body made of a metal material, having a pair of flanges arranged to be spaced apart and a central portion which connects the spaced-apart flanges and through which a combustion hole penetrates to allow a combustion gas and a raw oil material to react; a plurality of injection nozzles which spray the raw oil material inside the combustion hole; a pair of cooling rooms which are respectively provided on the facing inner plate surfaces of the flanges and exchange heat with the flanges while diffusing cooling water to the front surfaces of the flanges; a cooling distribution pipe which surrounds the outer circumferential surface of the combustion hole with a gap therebetween to form a flow path, and is divided into a first supply flow path and a second supply flow path by means of a partition panel so that the supplied cooling water is directed to each cooling room while exchanging heat with the whole combustion hole; a pair of cooling water supply pipes which are respectively installed on the first flow path and the second supply flow path and supply cooling water; and cooling water drain pipes which are respectively installed in the pair of cooling rooms and drain the heat-exchanged cooling water.

Wherein, it is preferable that the cooling room is composed of: a circular cooling housing which is arranged on the inner plate surfaces of the flanges with the cooling distribution pipe penetrating therethrough and forms a cooling space that cooling water from the cooling distribution pipe can flow into in order to exchange heat with the flanges; and a spiral guide which is arranged inside the cooling housing and forms a flow path so that the cooling water flowing in from the cooling distribution pipe is diffused in a spiral and directed toward the exterior of the plate surface of the flange.

Furthermore, it is preferable that inflow holes which communicate with the cooling room are respectively formed on both ends of the cooling distribution pipe so that the cooling water respectively supplied by the first and the second supply flow path flows into each cooling room.

Additionally, it is preferable that provided inside each of the first and the second supply flow path of the cooling distribution pipe is an annular focusing baffle plate which forms a gap spaced apart from the outer circumferential surface of the combustion hole at an incline in the range of 25 degrees-35 degrees when fixed to the cooling distribution pipe and thus, is able to concentrate the flow rate of the cooling water passing through the gap to both end portions of the combustion hole.

Also, it is preferable that an indented step for delaying the flow time of the cooling water is formed on the plate surface of the flange provided with the cooling room so that heat exchange of the cooling water flowing through the cooling room can be concentrated around the end portions of the combustion hole.

Meanwhile, it is preferable that the injection nozzles are coupled to a plurality of injection sockets that penetrate through the cooling distribution pipe while being arranged radially on the combustion hole.

Furthermore, it is preferable that a notched portion made of a heat resistant metal material for reinforcing where the edges are carbonized along the diameter of the combustion hole is further provided on the perimeter along the diameter of an end portion on one side of the combustion hole.

Lastly, it is preferable that a plurality of supporting members for keeping the flanges spaced apart are radially arranged between the pair of flanges.

### Advantages of the Invention

The carbon black reactor with a cooling function of the present invention and with the configuration described above has superb advantages in that the combustion hole of the reactor is made from a metal material, and cooling water is supplied in both directions in order to raise the cooling efficiency of the combustion hole that has been heated to a high temperature, and the supplied cooling water flows with air on top and cools the combustion hole, and thus deformation in the diameter of the combustion hole due to continuous exposure to high temperatures as in the prior art is fundamentally prevented.

In particular, the structural effect in which the flowing cooling water is concentrated at the weakest portion in the perimeter of the diameter of the combustion hole end portion and thus the stability of the weakest portion is further reinforced by another layer is also superb.

Furthermore, there is the advantage in that the quality of the carbon black produced can be consistently maintained as long as the shape of the combustion hole of the carbon black reactor is maintained, and above all refractory waste products are not generated like in the prior art.

### Brief Description of the Drawings

Figure 1 is a reference drawing in which a conventional reactor is installed in a carbon black manufacturing system.
Figure 2 is a perspective view of a conventional reactor.
Figure 3 is a reference drawing in which the carbon black reactor of the present invention is installed in a carbon black manufacturing system.
Figures 4 and 5 are a perspective view and a cross-sectional view of key parts showing the carbon black reactor of the present invention.
Figure 6 is a cross-sectional view of key parts along line I-I in Figure 5 and is a drawing in which the cooling housing of the cooling room has been removed.
Figure 7 is a cross-sectional view of key parts along line II-II in Figure 5 and is a drawing in which the cooling housing of the cooling room has been removed.

### Best Mode for Implementing the Invention

Hereinbelow, the preferred embodiments of the present invention shall be described in more detail with reference to the accompanying drawings. The embodiments of the present invention can be changed into various forms, and the scope of the present invention should not be construed as being limited to the embodiments described below. These embodiments are provided in order to describe the present invention in more detail to a person skilled in the technical field to which the present invention belongs. Accordingly, the form of each element shown in the drawings may be exaggerated to give emphasis for a clearer description.

Terms such as first and second can be used to described various constituent elements, however the constituent elements should not be limited by these terms. These terms are used only for the purpose of differentiating one constituent element from another constituent element.

The terms used in the present application are used simply to describe a specific embodiment, and are not intended to limit the present invention. Expressions in the singular include expressions in the plural unless clearly stated otherwise in the context. In the present application, terms such as "comprise" and "have" are intended to indicate the existence of a characteristic, number, step, operation, constituent element, component or a combination thereof disclosed in the specification and should also be understood to not preclude the possibility of the addition or the presence of one or more other characteristics, or numbers, steps, operations, constituent elements, components or a combination thereof.

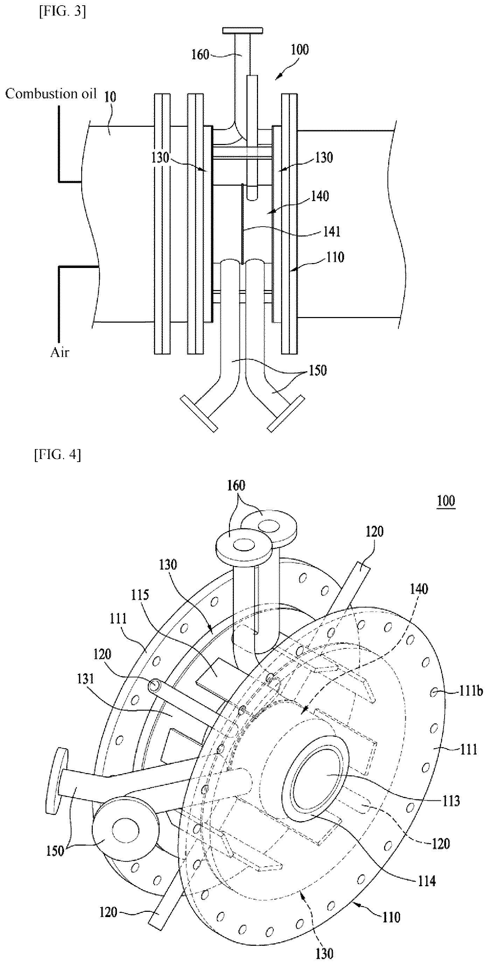

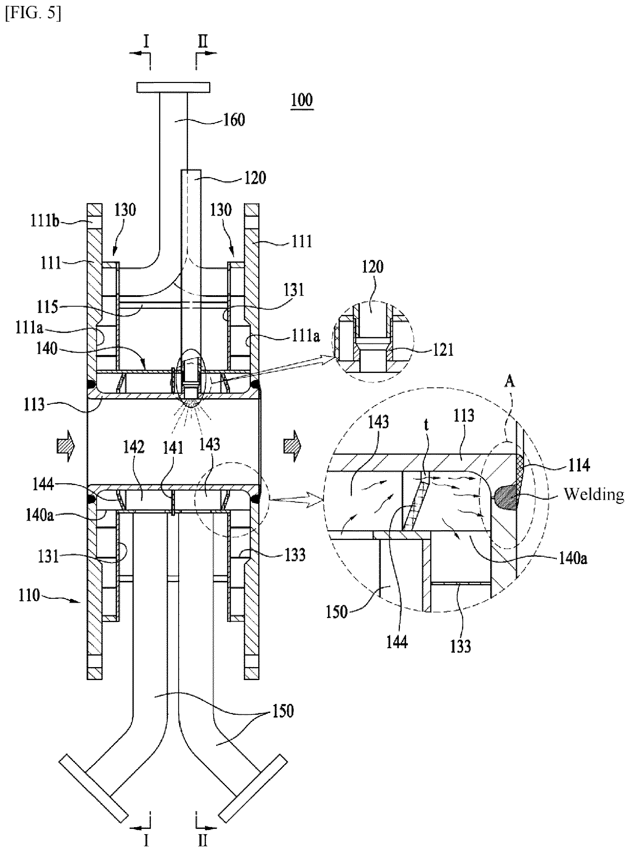

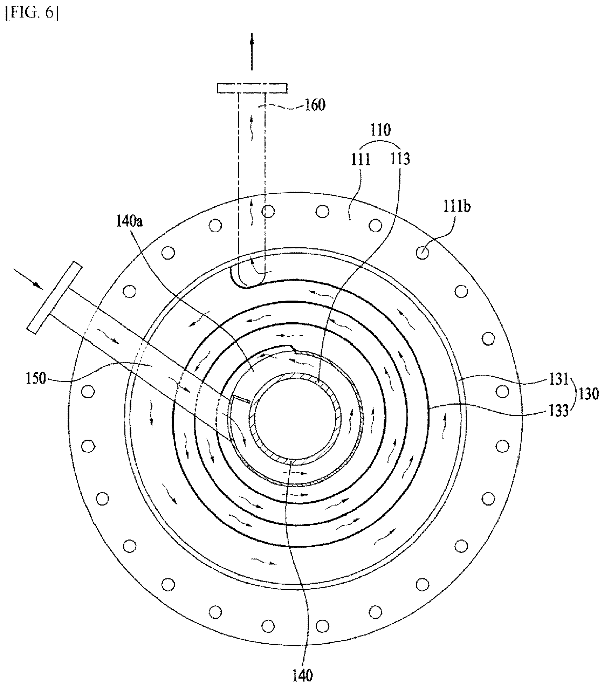

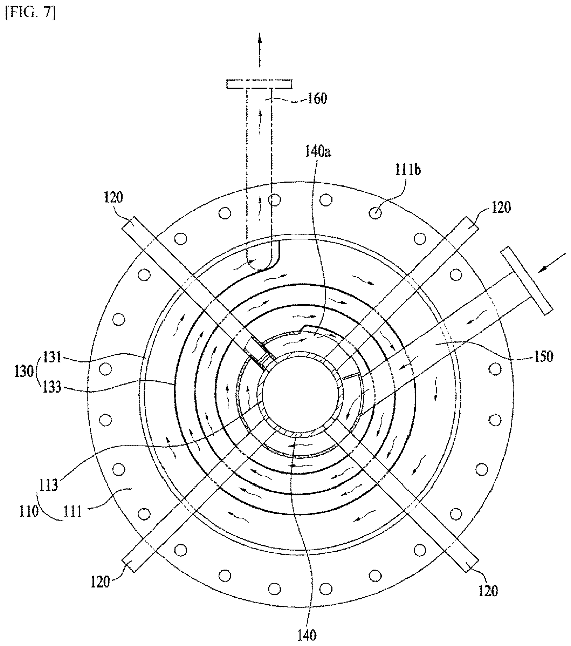

Figure 3 is a reference drawing in which the carbon black reactor of the present invention is installed in a carbon black manufacturing system. Figures 4 and 5 are a perspective view and a cross-sectional view of key parts showing the carbon black reactor of the present invention. Figure 6 is a cross-sectional view of key parts along line I-I in Figure 5 and is a drawing in which the cooling housing of the cooling room has been removed. Figure 7 is a cross-sectional view of key parts along line II-II in Figure 5 and is a drawing in which the cooling housing of the cooling room has been removed.

As shown in Figures 3 to 7, the carbon black reactor (100) of the present invention comprises: a body (110) made of a metal material, having a pair of flanges (111) arranged to be spaced apart and a central portion which connects the spaced-apart flanges and through which a combustion hole (113) penetrates to allow a combustion gas and a raw oil material to react; a plurality of injection nozzles (120) which spray the raw oil material inside the combustion hole (113); a pair of cooling rooms (130) which are respectively provided on the facing inner plate surfaces of the flanges (111) and exchange heat with the flanges (111) while diffusing cooling water to the front surfaces of the flanges (111); a cooling distribution pipe (140) which surrounds the outer circumferential surface of the combustion hole (113) with a gap therebetween to form a flow path, and is divided into a first supply flow path (142) and a second supply flow path (143) by means of a partition panel (141) so that the supplied cooling water is directed to each cooling room (130) while exchanging heat with the whole combustion hole (113); a pair of cooling water supply pipes (150) which are respectively installed on the first flow path (142) and the second supply flow path (143) and supply cooling water; and cooling water drain pipes (160) which are respectively installed in the pair of cooling rooms (130) and drain the heat-exchanged cooling water.

Before proceeding with the description, the biggest characteristic of the carbon black reactor (100) of the present invention is that the shape of the diameter of the combustion hole (113) is configured to not deform as the combustion hole (113) of the reactor, which produces a mixed gas comprising carbon black through a reaction between a combustion gas and a raw oil material, is made from a metal material, and the reactor is provided with a structure for cooling the combustion hole (113) which is continuously exposed to a high-temperature environment.

Furthermore, the structure described below which forms the carbon black reactor (100) is configured from a heat-resistant metal material and thus each structure is disposed through welding.

Furthermore, a pair having the same structure have naturally been given the same reference numeral, and only a single structure shall be described in order to prevent miscommunication in the description.

The carbon black reactor (100) of the present invention is coupled to the heating furnace (10) on the left side of the drawing wherein a liquid or gas combustion oil is supplied together with air and then reacted with an oxidizing agent, and thus produces a high temperature combustion gas in a system pipe conduit for producing carbon black as shown in Figure 3.

On the right side of the drawing of the carbon black reactor (100), a separate transfer pipe is installed to allow the mixed gas comprising carbon black produced by means of the reaction between the combustion gas and raw oil material inside the carbon black reactor (100) to be moved to post-processing, and the post-processing of the mixed gas is a common matter so description thereof has been omitted.

The body (110) is where the combustion gas flowing in from the heating furnace (10) and the supplied raw oil material are reacted, and comprises a combustion hole (113) and a pair of flanges (111) made of a metal material.

As shown in Figures 4 and 5, the pair of flanges (111) are in the form of a circular plate with a certain thickness and are spaced apart by a certain interval mutually facing each other.

The combustion hole (113) is configured to be a cylinder and be connected to the spaced apart flanges (111) so as to have an integrated form with the pair of flanges (111), and the central portion of the combustion hole (113) is penetrated through with a circle in the longitudinal direction to allow the reaction of the combustion gas flowing in from the heating furnace (10) and the raw oil material supplied via the injection nozzles (120) described below.

Here, the pair of flanges (111) and the combustion hole (113) are made from different heat-resistant metal materials, wherein SUS316L which has a reduced carbon concentration to be able to withstand high temperature (1500 degrees or more) environments is preferred for the combustion hole (113), and SUS304 which has chromium, nickel and manganese added to the iron is preferred for the pair of flanges (111).

Also, the pair of flanges (111) and the combustion hole (113) form a single body (110) by means of welding as shown in Figure 5.

Additionally, the outer periphery of the flange (111) has a plurality of coupling holes (111b) through which bolts (not shown) penetrate formed thereon in order to couple to the flanges (111) of adjacent pipes.

The materials of the combustion hole (113) and the flanges (111) in this embodiment are merely illustrative and the materials are not limited as long as they are a metal capable of withstanding a high-temperature environment.

Meanwhile, a notched portion (114) made of a heat resistant metal material for reinforcing where the edges are carbonized along the diameter of the combustion hole (113) due to the high temperatures as a result of the reaction between the combustion gas and the raw oil material is further provided on the perimeter along the diameter of an end portion on one side (the mixed gas discharge direction to the right side in the drawing) of the combustion hole (113), as shown in Figure 5.

Wherein, the notched portion (114) is preferably made from Duplex Steel 2207 which is a heat-resistant metal material, and is fixed to the edges of the diameter of the combustion hole (113) by means of welding.

The injection nozzles (120) allow direct spraying of raw oil material (Bunker C oil) into the combustion hole (113) to be achieved so that the combustion gas flowing into the combustion hole (113) can react with the raw oil material, and four injection nozzles are installed radially along the diameter of the combustion hole (113) as shown in Figures 4 to 7.

Wherein, the injection nozzles (120) are respectively coupled to four injection sockets (121) which are radially coupled to the combustion hole (113) along the diameter of the combustion hole (113) while penetrating through the cooling distribution pipe (140) described below, and are connected to supply lines of a raw oil material supply tank (not shown).

Here, the injection sockets (121) are installed penetrating the cooling distribution pipe (140) in order to enable support of the injection socket (121) coupled to the combustion hole (113) to be achieved at the same time as stable support of the injection nozzle (120) coupled to the injection socket (121).

Additionally, the injection nozzles (120) are connected to the raw oil material supply tank (not shown), and spray the raw oil material into the combustion hole (113) by means of supply pressure.

This embodiment shows four installed injection nozzles (120), but the number is not limited since the number may vary depending on the diameter of combustion hole (113).

The cooling room (130) is configured to enable heat exchange (cooling) of the flange (111) by diffusing the cooling water flowing in via the cooling distribution pipe (140) to the front surfaces of the flanges (111), and is configured as a pair provided facing each other on the inner plate surface of the pair of flanges (111).

Specifically, the cooling room (130) is configured to enable secondary cooling of the front surfaces of the flange (111) to be achieved in a process in which cooling water that has been supplied to the cooling distribution pipe (140) for primary cooling of the combustion hole (113) flows toward the cooling water drain pipes (160) described below.

Here, a single cooling room (130) only shall be described since the pair of cooling rooms (130) have the same structure as shown in Figures 4 to 7, and comprise a cooling housing (131) and a spiral guide (133).

The cooling housing (131) is arranged in a circular form corresponding to the flange (111) on the facing inner plate surface of the flange (111) with the distribution pipe (140) described below penetrating therethrough as shown in Figure 5.

Wherein, the cooling housing (131) maintains a certain height to allow the formation of a cooling space in which the spiral guide (133) described below can be arranged in order to exchange heat with the front surfaces of the flanges (111) together with the flow of cooling water from the cooling distribution pipe (140).

The spiral guide (133) maintains a vortex shape having a certain height as shown in Figures 6 and 7 and, thus forms a flow path in which the cooling water flowing into the cooling housing (131) can flow.

Specifically, the spiral guide (133) is arranged inside the cooling housing (131) and forms a spiral flow path to allow heat exchange with the front surface of the flanges (111) to be achieved while diffusing the cooling water, which has exchanged heat with the combustion hole (113) and is flowing in via the cooling distribution pipe (140), in a spiral from the center of the flange (111) toward the exterior of the plate surface.

Accordingly, the spiral guide (133) forms a long flow path in which the cooling water flows, and thus enables the flow of the cooling water to flow quicker due to the spiral flow path at the same time as increasing the contact area for heat exchange.

Should there not be a spiral guide (133), the cooling water around the cooling water drain pipe (160) described below may be discharged quickly, but the discharge of the cooling water in a region that is far distance wise from the cooling water drain pipe (160) slows, thus heat exchange cannot be uniformly achieved as the temperature distribution of the cooling water flowing inside the cooling room (130) varies.

Meanwhile, the plate surface of the flange (111) covered by the cooling housing (131) of the cooling room (130) may have formed thereon a circular indented step (111a) which is indented by a certain height and width around the combustion hole (113) so that heat exchange of the cooling water flowing along the spiral guide (133) of the cooling room (130) can be concentrated around the end portions of the combustion hole (113), as shown in Figure 5.

This indented step (111a) is able to achieve concentrated heat exchange around the end portions of the combustion hole (113) since the flow path in which the cooling water can flow is expanded to be deeper and wider and consequently the flow time of the cooling water flowing in the spiral guide (133) is delayed by as much as is in the indented step (111a), as shown in Figure 5.

Additionally, the spiral guide (133) in the region where the indented step (111a) is formed is of course installed extending to the indented step (111a) as shown in Figure 5.

The cooling distribution pipe (140) is configured to enable the cooling water supplied via the cooling water supply pipe (150) described below to primarily exchange heat with the whole of the combustion hole (113) while being directed to each cooling room (130) provided on the pair of flanges (111).

To this end, the cooling distribution pipe (140) has a circular form of a certain length and surrounds the outer circumferential surface of the combustion hole (113) with a gap therebetween and both ends are fixed to the inner surface of the pair of flanges (111), and thus a flow path is formed in which cooling water flows between the cooling distribution pipe (140) and the outer circumferential surface of the combustion hole (113), as shown in Figures 4 to 7.

The flow path between the cooling distribution pipe (140) and the outer circumferential surface of the combustion hole (113) is divided into a first supply flow path (142) and a second supply flow path (143) by means of a partition panel (141) disposed centrally in the longitudinal direction of the cooling distribution pipe (140) so that the supplied cooling water can be simultaneously directed to each cooling room (130) provided on the pair of flanges (111).

Furthermore, inflow holes (140a) which communicate with the cooling room (130) are respectively formed on both ends of the cooling distribution pipe (140) so that the cooling water respectively supplied by the first supply flow path (142) and the second supply flow path (143) flows into each cooling room (130) provided on both flanges (111) as shown in Figures 5 to 7.

The inflow holes (140a) are formed to be in communication with the entrance portion where the spiral guide (133) of the cooling room (130) starts, and thus allow the flow of the cooling water flowing in from the center of the spiral guide (133) to be achieved as shown in Figures 6 and 7.

Therefore, the cooling distribution pipe (140) is configured to be in contact with the whole surface of the combustion hole (113) and thus can achieve continuous heat exchange with the whole combustion hole (113) using the initially supplied cooling water in a process in which cooling water respectively supplied by the first supply flow path (142) and the second supply flow path (143) flows into each cooling room (130) via each communication hole.

Meanwhile, an annular focusing baffle plate (144) at an incline in the range of 25 degrees-35 degrees is provided inside each of the first supply flow path (142) and the second supply flow path (143) of the cooling distribution pipe (140) as shown in Figure 5.

The focusing baffle plate (144) has its outer perimeter fixed to the inner circumferential surface of the cooling distribution pipe (140), and the internal inner diameter is arranged to have the outer circumferential surface of the combustion hole (113) penetrating therethrough and to be spaced apart from said outer circumferential surface, and thus forms a gap (t) through which the cooling water passes between the inner diameter and the outer circumferential surface of the combustion hole (113).

The above gap (t) is configured to enable the concentration of the flow rate of the cooling water passing therethrough at the edges of both end portions of the combustion hole (113) as shown by the arrows in the expanded view of Figure 5, and thus induces concentrated heat exchange at the edges that receive continuous pressure due to the reaction of the combustion gas and raw oil material and so fundamentally preventing the phenomenon of the inner diameter of the edges at the relative weakest portion (A) melting due to long-term exposure to a high-temperature environment.

Wherein, if the incline of the focusing baffle plate (144) is 25 degrees or less, the incline is formed to be gentle and thus there is the problem that heat exchange cannot be concentrated at the weakest portion (A) as passage through the gap (t) is slow due to a stagnation phenomenon resulting from the flowing cooling water hitting the focusing baffle plate (144) and forming an eddy. Conversely, if the incline is 35 degrees or more, the incline is formed sharply and thus there is the problem that that the heat exchange efficiency deteriorates at the weakest portion (A) as a result of the cooling water passing through the gap (t) too quickly.

Therefore, the incline of the focusing baffle plate (144) being maintained in the range of 25 degrees-35 degrees is most ideal, and within this incline range it is possible to maximize heat exchange at the weakest portion (A) due to the flow rate of the cooling water passing through the gap (t).

The cooling water supply pipe (150) is provided as a pair, and is directly installed on the first supply flow path (142) and the second supply flow path (143) to achieve supply of cooling water as shown in Figures 4 to 7.

The cooling water drain pipe (160) is provided as a pair, and is installed on each cooling housing (131) of the cooling room (130) provided on each flange (111) to achieve drainage of the cooling water that has flowed around and exchanged heat with the combustion hole (113) and the cooling room (130) as shown in Figures 4 to 7.

Wherein, the cooling water drained via the cooling water drain pipe (160) flows into a cooling tower (not shown), and the cooling water which has passed through the cooling tower and dropped in temperature is resupplied to the first supply flow path (142) and the second supply flow path (143) via the cooling water supply pipe (150) and exchanges heat with the reactor by means of continuous circulation.

Meanwhile, a plurality of supporting members (115) for keeping the flanges (111) spaced apart can be radially arranged between the pair of flanges (111).

That is, the supporting members (115) around the radius fundamentally prevent the spaced apart flanges (111) from tilting in one direction, and thus are able to maintain the coupled state of each structure fixed by welding.

The supporting members (115) are shown in this embodiment as being arranged between the pair of cooling rooms (130), but are not limited to this positioning.

Hereinbelow, the process of exchanging heat with the carbon black reactor (100) according to the present invention shall be described with reference to the accompanying drawings.

When a raw oil material is supplied to the carbon black reactor (100) via an injection nozzle (120), the supplied raw oil material and a flowing-in combustion gas are reacted under high temperatures inside the combustion hole (113) and produce a mixed gas comprising carbon black.

Wherein, the cooling water is respectively supplied to the first supply flow path (142) and the second supply flow path (143) of the cooling distribution pipe (140) via two cooling water supply pipes (150) in order to cool the carbon black reactor (100).

The cooling water supplied to the first supply flow path (142) and the second supply flow path (143) flows inside the first supply flow path (142) and the second supply flow path (143) and exchanges heat with the combustion hole (113) through contact with the combustion hole (113).

In the process of the cooling water that has passed the combustion hole (113) passing through the gap (t) of the focusing baffle plate (144), the flow rate quickens and heat exchange is concentrated around the weakest portion (A) of the end portions of the combustion hole (113) as shown in the expanded view in Figure 5.

The cooling water that has passed the weakest portion (A) flows into the spiral guide (133) of the cooling room (130) via the inflow holes (140a) and flows in a spiral along the spiral guide (133) and is diffused to the whole plate surface of the flange (111).

Wherein, the cooling water contacts the flange (111) in the process of flowing in the spiral guide (133) and exchanges heat and is ultimately supplied to the cooling tower (not shown) via the cooling water drain pipe (160).

The cooling water supplied to the cooling tower is resupplied at a low temperature to the first supply flow path (142) and the second supply flow path (143) via the cooling water supply pipe (150) and is repeatedly circulated inside the carbon black reactor (100) while exchanging heat.

As has been described up to now, the carbon black reactor of the present invention has superb advantages in that the combustion hole of the carbon black reactor is made from a heat-resistant metal material, and cooling water is supplied in both directions in order to raise the cooling efficiency of the combustion hole that has been heated to a high temperature, and the supplied cooling water flows with air on top and cools the combustion hole, and thus deformation in the diameter of the combustion hole due to continuous exposure to high temperatures as in the prior art is fundamentally prevented.

In particular, the structural effect in which the flowing cooling water is concentrated at the weakest portion in the perimeter of the diameter of the combustion hole end portion and thus the stability of the weakest portion is further reinforced by another layer is also superb.

Furthermore, there is the advantage in that the quality of the carbon black produced can be consistently maintained as long as the shape of the combustion hole of the carbon black reactor is maintained, and above all refractory waste products are not generated like in the prior art.

Hereinabove, the carbon black reactor of the present invention has been described by means of preferred embodiments and the accompanying drawings, but this is merely to facilitate understanding of the present invention and the technical scope of the invention is, of course, not intended to be limited thereto.

That is, naturally various modifications or adaptations are possible for a person skilled in the technical field to which the present invention belongs without departing from the technical gist of the present invention, and it goes without saying that such modifications and adaptations are within the technical scope of the present invention as interpreted in the Claims.

### [Description of Reference Numerals]

| | | | |
|---|---|---|---|
| 100: | Carbon black reactor | 110: | Body |
| 111: | Flange | 111a: | Indented step |
| 111b: | Coupling hole | 113: | Combustion hole |
| 114: | Notched portion | 115: | Supporting member |
| 120: | Injection nozzles | 121: | Injection socket |
| 130: | Cooling room | 131: | Cooling housing |
| 133: | Spiral guide | 140: | Cooling distribution pipe |
| 140a: | Inflow hole | 141: | Partition panel |
| 142: | First supply flow path | 143: | Second supply flow path |
| 144: | Focusing baffle plate | 150: | Cooling water supply pipe |
| 160: | Cooling water drain pipe | t: | Gap |

## Claims

1. A carbon black reactor with a cooling function comprising:
a body (110) made of a metal material, having a pair of flanges (111) arranged to be spaced apart and a central portion which connects the spaced-apart flanges and through which a combustion hole (113) penetrates to allow a combustion gas and a raw oil material to react;
a plurality of injection nozzles (120) which spray the raw oil material inside the combustion hole (113);
a pair of cooling rooms (130) which are respectively provided on the facing inner plate surfaces of the flanges (111) and exchange heat with the flanges (111) while diffusing cooling water to the front surfaces of the flanges (111);
a cooling distribution pipe (140) which surrounds the outer circumferential surface of the combustion hole (113) with a gap therebetween to form a flow path, and is divided into a first supply flow path (142) and a second supply flow path (143) by means of a partition panel (141) so that the supplied cooling water is directed to each cooling room (130) while exchanging heat with the whole combustion hole (113);
a pair of cooling water supply pipes (150) which are respectively installed on the first flow path (142) and the second supply flow path (143) and
supply cooling water; and
cooling water drain pipes (160) which are respectively installed in the pair of cooling rooms (130) and drain the heat-exchanged cooling water,
**characterized in that**
the cooling room (130) is composed of:
a circular cooling housing (131) which is arranged on the inner plate surfaces of the flanges (111) with the cooling distribution pipe (140) penetrating therethrough and forms a cooling space that cooling water from the cooling distribution pipe (140) can flow into in order to exchange heat with the flanges (111); and
a spiral guide (133) which is arranged inside the cooling housing (131) and forms a flow path so that the cooling water flowing in from the cooling distribution pipe (140) is diffused in a spiral and directed toward the exterior of the plate surface of the flange (111).

2. The carbon black reactor with a cooling function as in claim 1, **characterized in that**
inflow holes (140a) which communicate with the cooling room (130) are respectively formed on both ends of the cooling distribution pipe (140) so that the cooling water respectively supplied by the first and the second supply flow path (142, 143) flows into each cooling room (130).

3. The carbon black reactor with a cooling function as in claim 1, **characterized in that**
provided inside each of the first and the second supply flow path (142, 143) of the cooling distribution pipe (140) is an annular focusing baffle plate (144) which forms a gap (t) spaced apart from the outer circumferential surface of the combustion hole (113) at an incline in the range of 25 degrees-35 degrees when fixed to the cooling distribution pipe (140) and thus, is able to concentrate the flow rate of the cooling water passing through the gap (t) to both end portions of the combustion hole (113).

4. The carbon black reactor with a cooling function as in claim 1, **characterized in that**
an indented step (111a) for delaying the flow time of the cooling water is formed on the plate surface of the flange (111) provided with the cooling room (130) so that heat exchange of the cooling water flowing through the cooling room (130) can be concentrated around the end portions of the combustion hole (113).

5. The carbon black reactor with a cooling function as in claim 1, **characterized in that**
the injection nozzles (120) are coupled to a plurality of injection sockets (121) that penetrate through the cooling distribution pipe (140) while being arranged radially on the combustion hole (113).

6. The carbon black reactor with a cooling function as in claim 1, **characterized in that**
a notched portion (114) made of a heat resistant metal material for reinforcing where the edges are carbonized along the diameter of the combustion hole (113) is further provided on the perimeter along the diameter of an end portion on one side of the combustion hole (113).

7. The carbon black reactor with a cooling function as in claim 1, **characterized in that**
a plurality of supporting members (115) for keeping the flanges (111) spaced apart are radially arranged between the pair of flanges (111).
